# FASCICULE DE BREVET EUROPEEN

(11) **EP 4 100 283 B1**
(45) Date de publication et mention de la délivrance du brevet: **07.08.2024**
(21) Numéro de dépôt: 21701985.0
(22) Date de dépôt: 25.01.2021
(51) Int. Cl.: B60R 19/48, B60R 19/18

(54) **BOUCLIER AVANT DE VÉHICULE AUTOMOBILE ÉQUIPÉ D'UN RADAR ET STRUCTURE AVANT DE VÉHICULE COMPRENANT UN TEL BOUCLIER**
FRONTSCHUTZFORMTEIL FÜR EIN KRAFTFAHRZEUG MIT EINER RADAR- UND FRONTSTRUKTUR EINES FAHRZEUGS MIT EINEM SOLCHEN SCHUTZFORMTEIL
FRONT PROTECTIVE MOULDING FOR MOTOR VEHICLE EQUIPPED WITH A RADAR AND FRONT STRUCTURE OF VEHICLE COMPRISING SUCH A PROTECTIVE MOULDING

(30) Priorité: 03.02.2020 FR 2001027
(43) Date de publication de la demande: 14.12.2022
(73) Titulaire: Renault S.A.S., 92100 Boulogne-Billancourt (FR)
(72) Inventeur: DIDIER, Sebastien, 78650 BEYNES (FR); MICHEL, Lionel, 78180 Montigny-le-Bretonneux (FR)
(86) Numéro de dépôt international: PCT/EP2021/051633
(87) Numéro de publication internationale: WO 2021/156090

(56) Documents cités:
- EP-A1- 2 165 890
- EP-A2- 1 889 753
- WO-A1-2019/043262
- DE-A1- 102018 004 377
- FR-A1- 3 083 751

## Description

L'invention a pour objet un bouclier avant de véhicule automobile équipé d'un radar ainsi qu'une structure avant de véhicule comprenant un tel bouclier.

Avec l'évolution et la généralisation des systèmes d'aide à la conduite embarqués, de plus en plus de véhicules sont équipés d'un radar destiné à la régulation de la vitesse du véhicule en fonction de distances de sécurité avec l'environnement extérieur. Ce type de radar, appelé « radar AEBS » (Advanced Energy Braking System - Système de freinage énergétique avancé) est généralement implanté en face avant du véhicule. Il est ainsi devenu nécessaire d'assurer une intégrité optimale de ces systèmes, notamment dans les cas des petits chocs avant aussi appelés « chocs parking » soumis à la réglementation européenne ECE42. Hors, ce radar peut se retrouver en face de l'impacteur rigide lancé à 4km/h prévu dans la règlementation ECE42 dans le cas de ces petits chocs avant, notamment lorsque cet impacteur est positionné en face du centre du véhicule suivant la largeur de ce dernier. Les documents EP 2 165 890 A1, DE 10 2018 004377 A1 décrivent des boucliers avant de véhicules automobiles comprenant une peau de bouclier et un élément absorbeur de choc. Le document WO 2019/043262 A1 décrit les mêmes moyens ainsi qu'un support de radar, correspondant ainsi au préambule de la revendication 1.

Il convient ainsi de limiter au maximum les intrusions des impacteurs lors de petits chocs avant, notamment de type ECE42, afin de préserver un radar AEBS implanté en face avant, en particulier lorsque le radar est fixé au bouclier et dépourvu de capot de protection.

A cet effet, l'invention propose un bouclier avant de véhicule automobile avec les caractéristiques de la revendication 1.

Ainsi, le support de radar est situé en partie en avant de l'absorbeur de choc suivant la direction longitudinale et en partie en dessous de ce dernier verticalement.

Selon l'invention, l'élément absorbeur de choc présente deux butées d'absorption de choc situées de part et d'autre du support de radar suivant la direction transversale, ces butées étant solidaires d'une face inférieure de l'élément absorbeur de choc. Cette face inférieure est notamment dirigée vers le sol lorsque le bouclier est monté sur le véhicule. Elle peut être parallèle ou sensiblement parallèle aux directions transversale et longitudinale.

Par cet agencement, les butées d'absorption de choc vont recevoir et absorber un choc avant de part et d'autre du support de radar. Par ailleurs, le support radar étant situé devant puis dessous l'élément absorbeur de choc, et en particulier au moins en partie entre les butées, une déformation de ces éléments lors d'un choc avant longitudinal n'engendrera pas un contact entre les butées et le support radar, ce qui permet de préserver le support radar.

Avantageusement, les butées peuvent être disposées symétriquement de part et d'autre du support radar, celui-ci étant situé au centre du bouclier suivant la direction transversale.

Le bouclier avant peut présenter une ou plusieurs des caractéristiques suivantes :
- les butées font saillie d'une face verticale de l'élément absorbeur de choc située d'un côté opposé à la peau de bouclier. Cette face verticale peut notamment être parallèle ou sensiblement parallèle à la direction transversale.
- Les butées sont réalisées d'une pièce avec l'élément absorbeur de choc, notamment par moulage.
- Chaque butée comprend des parois définissant des nervures s'étendant verticalement et perpendiculairement (ou sensiblement verticalement et sensiblement perpendiculairement) à la direction transversale et des parois définissant un boîtier recevant les nervures et solidaires de bords verticaux ou sensiblement verticaux des nervures. Avantageusement, le boîtier peut alors être ouvert sur une face inférieure opposée à l'élément absorbeur de choc.
- Le support de radar comprend au moins un élément de fixation supérieur et au moins un élément de fixation inférieur fixés chacun à la peau de bouclier, l'au moins un élément de fixation supérieur étant optionnellement fixé aussi à une partie supérieure du bouclier, le support de radar comprenant optionnellement un cadre de réception et de fixation du radar situé entre les éléments de fixation supérieur et inférieur.
- L'élément absorbeur de choc, le support de radar, et optionnellement la partie supérieure du bouclier, sont en matériau polymère.

L'invention concerne également une structure avant de véhicule automobile comprenant un bouclier avant selon l'invention et une traverse avant de support du bouclier, l'élément absorbeur de choc s'étendant le long de la traverse avant, en regard de celle-ci suivant une direction longitudinale du véhicule lorsque la structure avant est montée sur le véhicule.

Avantageusement, chaque butée peut être située :
- en regard de la traverse avant sur au moins une partie de sa longueur mesurée suivant la direction longitudinale,
- optionnellement en regard de la traverse avant sur au moins une partie de sa hauteur mesurée verticalement lorsque la structure avant est montée sur le véhicule.

Cet agencement permet d'éviter un pivotement des butées par rapport à la traverse avant lors d'un choc frontal. Notamment, ceci peut être obtenu par une position des butées en saillie par rapport à l'élément absorbeur de choc au moins suivant la direction longitudinale du véhicule, éventuellement aussi suivant la direction verticale du véhicule, en direction de l'arrière du véhicule et du sol respectivement.

L'invention concerne enfin un véhicule automobile comprenant un bouclier selon l'invention ou une structure avant selon l'invention.

L'invention est maintenant décrite en référence aux dessins annexés, non limitatifs, dans lesquels :
[Fig. 1] La figure 1 représente une vue en perspective de la face interne d'un bouclier avant selon un mode de réalisation de l'invention.
[Fig. 2] La figure 2 représente une vue trois quart arrière éclatée du bouclier représenté figure 1, l'élément absorbeur de choc n'étant pas représenté, cette vue illustrant la fixation du support radar sur les parties supérieure et inférieure du bouclier.
[Fig. 3] La figure 3 représente une vue trois quart arrière de l'élément absorbeur de choc de la figure 1.
[Fig. 4] La figure 4 est une vue de dessous d'une butée de l'élément absorbeur de choc de la figure 3.
[Fig. 5] La figure 5 est une vue de face d'une butée de l'élément absorbeur de choc de la figure 3.
[Fig. 6] La figure 6 représente partiellement une vue en perspective de la face interne d'une structure avant de véhicule automobile selon un mode de réalisation, après déformation résultant d'une intrusion maximale d'un impacteur conforme à la règlementation ECE42 correspondant à un choc parking avant.
[Fig. 7] La figure 7 est une section transversale selon la ligne de coupe A-A s'étendant dans un plan XZ de la figure 6 (la ligne A-A étant mesurée à une distance de 160mm en Y par rapport à un plan médian vertical longitudinal du véhicule), cette section étant considérée également après déformation résultant d'une intrusion maximale d'un impacteur conforme à la règlementation ECE42 correspondant à un choc parking avant.
[Fig. 8] La figure 8 est une vue agrandie de la traverse et de l'élément absorbeur de choc de la figure 6.
[Fig. 9] La figure 9 est une vue en coupe longitudinale de la figure 8 suivant la ligne B-B.

Dans la présente description, les termes avant, arrière, supérieur, inférieur, font référence aux directions avant et arrière, supérieure et inférieure du véhicule, lorsque la structure avant et le bouclier avant sont montés sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend un élément dont une ou plusieurs parties définissant une direction ou un plan forment un angle d'au plus ±20°, voire d'au plus 10° ou d'au plus 5°, avec une direction/un plan horizontal, longitudinal ou vertical.

Par sensiblement parallèle ou perpendiculaire, on entend un élément dont une ou plusieurs parties définissant une direction ou un plan formant un angle s'écartant d'au plus ±20°, voire d'au plus 10° ou d'au plus 5° d'une direction ou d'un plan parallèle ou perpendiculaire.

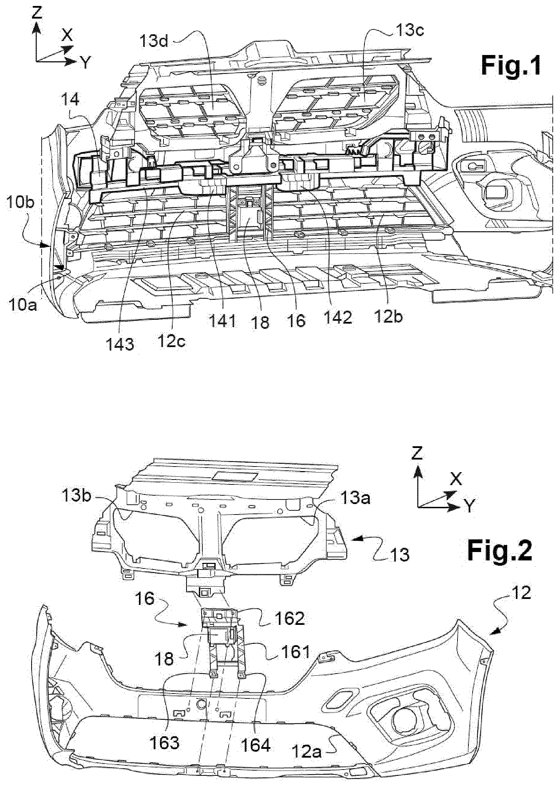

La figure 1 représente un bouclier avant 10 vu de sa face interne 10a, le bouclier avant 10 présentant par ailleurs une face externe 10b visible de l'extérieur du véhicule.

Le bouclier avant 10 comprend une peau de bouclier 12, un élément absorbeur choc 14 s'étendant suivant la direction transversale Y et fixé à la peau de bouclier 12 du côté de la face interne 10a du bouclier et un support de radar 16 situé à l'avant et s'étendant en dessous de l'élément absorbeur de choc 14 et fixé à la face interne 10a du bouclier. Le support de radar 16 supporte un radar 18, par exemple un radar AEBS. Le support de radar 16 est ici situé au centre ou à proximité du centre du bouclier suivant la direction transversale Y.

Selon l'invention, l'élément absorbeur de choc 14 présente deux butées d'absorption de choc 141, 142 situées de part et d'autre du support de radar 16 suivant la direction transversale. Ces butées, autrement appelées « butoirs » sont solidaires d'une face inférieure 143 de l'élément absorbeur de choc, située du côté du support de radar. Cette face inférieure 143 s'étend sensiblement dans le plan des directions X et Y du véhicule. Autrement dit, les butées 141, 142 font saillie de l'élément absorbeur de choc 14 verticalement en direction du sol.

Avantageusement, les butées peuvent être agencées de manière symétrique de part et d'autre du support de radar 16, pour une meilleure répartition de l'absorption d'un choc.

Les butées pourront avantageusement être disposées le plus près possible du support de radar suivant la direction transversale, sans toutefois qu'il y ait de recouvrement en Y entre les butées et le support de radar afin d'éviter que les butées ne viennent en contact avec le support de radar lors d'un choc en X.

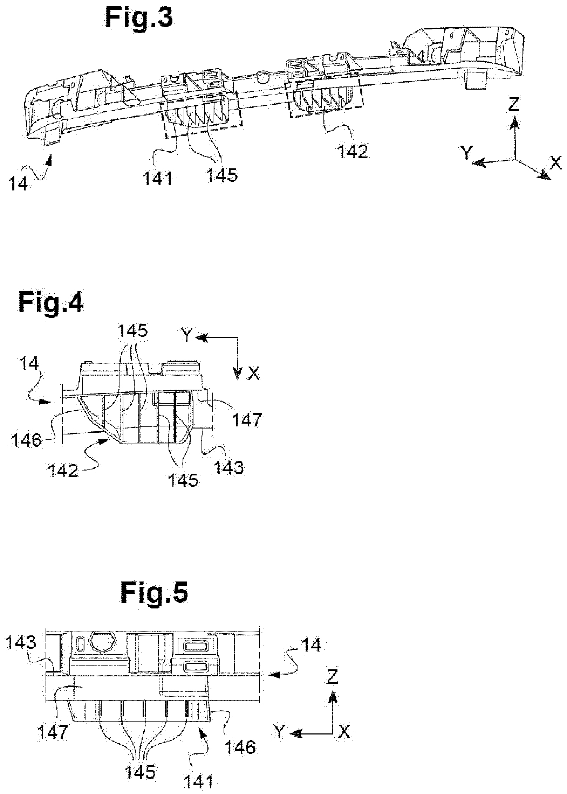

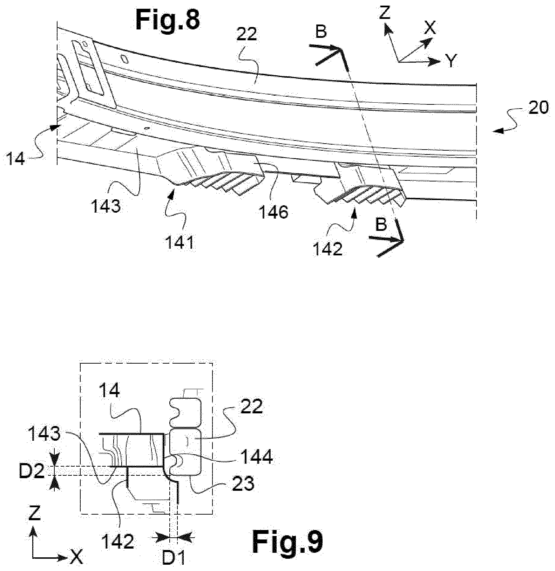

Dans le mode de réalisation représenté, tel que visible plus particulièrement sur les figures 3 à 7, chaque butée 141, 142 fait saillie d'une face verticale 144 de l'élément absorbeur de choc 14 située d'un côté opposé à la peau de bouclier, autrement dit, cette face verticale 144 est dirigée vers l'arrière du véhicule (voir figure 8). Chaque butée peut ainsi dépasser de l'élément absorbeur de choc 14 d'une distance prédéterminée suivant la direction longitudinale vers l'arrière du véhicule. Ceci permet notamment une coopération de chaque butée avec une traverse extrême avant tel que décrit plus loin.

L'élément absorbeur de choc 14 peut avantageusement être réalisé en matériau polymère, notamment les matériaux polymère habituellement utilisés pour réaliser des éléments d'absorption de choc.

Dans un mode de réalisation préféré, chaque butée 141, 142 est réalisée d'une pièce avec l'élément absorbeur de choc 14, par exemple par moulage d'un matériau polymère.

Tel que visible sur les figures, chaque butée 141, 142 comprend des parois 145 définissant des nervures s'étendant verticalement et perpendiculairement à la direction transversale et des parois 146, 147 définissant un boîtier recevant les nervures et solidaires de bords verticaux ou sensiblement verticaux des nervures. La paroi 147 est ici dans le prolongement d'une paroi de l'élément absorbeur de choc. Les parois 146, 147 entourent ainsi entièrement les nervures dans l'exemple, sur au moins une partie de leur hauteur (pour la paroi 147) ou sur la totalité de leur hauteur (pour la paroi 146), cette hauteur étant mesurée verticalement. Ces parois 146, 147 forment ici un boîtier de forme générale trapézoïdale. L'invention n'est toutefois pas limitée à cette forme et un boîtier en forme de parallélépipède ou similaire est envisageable.

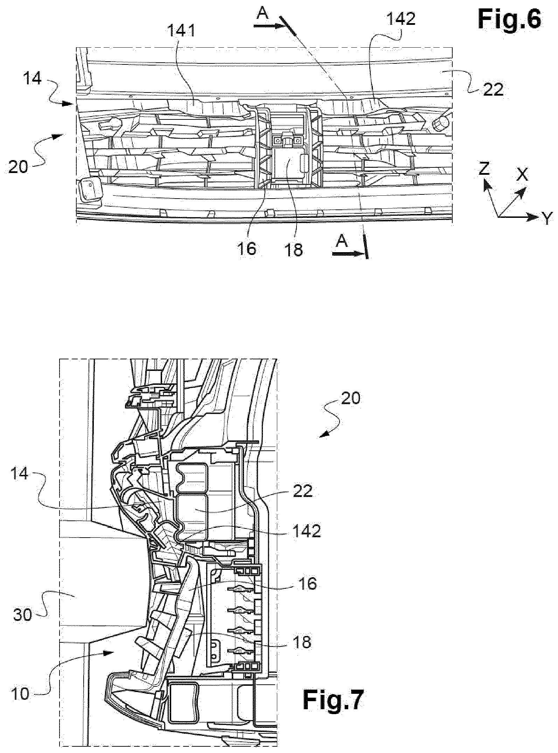

Dans l'exemple, le boîtier est ouvert du côté d'une face inférieure opposée à l'élément absorbeur de choc, autrement dit vers le sol, facilitant ainsi la réalisation de chacune des butées par moulage (voir figure 7).

A titre d'exemple, on pourra réaliser des butées présentant 4 à 6 nervures et des dimensions de :
- de 55 à 65 mm suivant la direction X,
- de 120 à 160 mm suivant la direction Y,
- de 40 à 55 mm suivant la direction Z.

L'invention n'est toutefois pas limitée à un nombre de nervures, aux dimensions des butées, ni à leur forme, pourvu qu'elles permettent une absorption du choc de part et d'autre du support de radar. Les dimensions, formes et nombres de nervures pourront être déterminés par l'homme du métier par des simulations pour une absorption optimale d'un choc en X.

Dans le mode de réalisation représenté, le bouclier avant 10 présente une partie inférieure formée par la peau de bouclier 12 et une partie supérieure 13 formant un renfort, tel que visible plus clairement figure 2. L'élément absorbeur de choc 14 est fixé à la peau de bouclier 12, à proximité de la partie supérieure 13. Le support de radar 16 est fixé à la partie inférieure 12 et à la partie supérieure 13 du bouclier. L'invention n'est toutefois pas limitée à un nombre de parties particulier du bouclier.

De manière générale, quel que soit le mode de réalisation, le support de radar 14 peut présenter au moins un élément de fixation supérieur 162 et au moins un élément de fixation inférieur, deux, 163, 164, dans l'exemple représenté. De préférence, comme dans l'exemple, l'au moins un élément de fixation supérieur 162 est fixé à la partie inférieure 12 et à la partie supérieure 13 du bouclier et les éléments de fixation inférieurs 163, 164 sont fixés uniquement à la partie inférieure 12. Ceci peut permettre d'améliorer la rigidité des fixations, notamment au niveau de la jonction des parties inférieure et supérieure du bouclier, qui se trouve dans une zone en générale la plus en avant du bouclier en X et donc davantage déformée en cas de choc. Dans l'exemple, l'au moins un élément de fixation supérieur 62 est fixé à la peau de bouclier au dessus de l'élément absorbeur de choc et l'au moins un élément de fixation inférieur est fixé au dessous de l'élément absorbeur de choc. L'élément absorbeur de choc s'étend ainsi en partie en avant de l'élément absorbeur de choc en X. De manière générale, l'élément absorbeur de choc pourra présenter, en regard du support de radar suivant la direction longitudinale, une face plane ou sensiblement plane (face perpendiculaire ou sensiblement perpendiculaire à la direction longitudinale) et/ou une dimension réduite en X. Ceci peut limiter davantage les risques de détérioration du support de radar lors d'un choc.

L'élément de fixation supérieur 162 forme ici une plaque percée pour sa fixation à la peau de bouclier 12 et à la partie supérieure 13. Les éléments de fixation inférieurs 163, 164 forment des pattes percées verticales ou sensiblement verticales, situées sensiblement dans le prolongement d'un cadre 161 de réception et de fixation du radar 18. Ce dernier est ici situé entre les éléments de fixation supérieur 162 et inférieurs 163, 164 (voir figure 2). L'utilisation d'un support présentant une partie de réception et de fixation en forme de cadre permet de réaliser un support présentant une certaine souplesse, ce qui favorise sa déformation plastique lors d'un petit choc et son retour en place après le choc. On peut toutefois envisager une partie de réception et de fixation en forme de plaque ou autre, bien que cela ne soit pas préféré.

De préférence, le support de radar est en matériau polymère, par exemple en copolymère éthylène/propylène, éventuellement chargé en talc ou similaire pour davantage de plasticité.

Dans l'exemple représenté, chaque partie inférieure 12 et supérieure 13 du bouclier présente enfin des ouvertures 12a, 13a et 13b respectivement (voir figure 2) recevant des grilles 12b, 12c, 13b et 13c visibles figure 1. La présence de grilles est usuelle et l'invention ne sera pas limitée par le nombre et la disposition des ouvertures et des grilles.

De préférence, la peau de bouclier 12 et la partie supérieure du bouclier 13 sont également en matériau polymère.

Le bouclier avant 10 décrit fait partie d'une structure avant 20 de véhicule automobile représentée figures 7 et 8. Cette structure avant 20 présente une traverse avant 22 s'étendant suivant la direction transversale du véhicule. Cette traverse avant 22 forme habituellement une traverse extrême avant du véhicule. L'élément absorbeur de choc 14 s'étend le long de la traverse avant 22, du côté avant de celle-ci et en regard de la traverse avant 22 suivant la direction longitudinale X du véhicule.

En général, l'élément absorbeur de choc 14 est situé à proximité immédiate de la traverse avant 22 en X de sorte qu'en cas de faible choc en X (inférieur ou égal à 4 km/h), il entre en contact avec celle-ci, ce qui l'empêche de reculer davantage. Dès lors, l'élément absorbeur de choc 14 ainsi que les butées 141, 142 vont se déformer et absorber le choc. La présence des butées permet de limiter la déformation des éléments situés entre elles, ici le support de radar.

Dans un mode de réalisation représenté sur les figures 6 à 9, l'élément absorbeur de choc 14 est configuré de sorte que chaque butée 141, 142 est située :
- en regard de la traverse avant 22 sur au moins une partie de sa longueur mesurée suivant la direction longitudinale X,
- en regard de la traverse avant 22 sur au moins une partie de sa hauteur mesurée verticalement (en Z).

Autrement dit, chaque butée 141, 142 présente une distance de recouvrement D1 en X avec la traverse avant 22 et chaque butée présente une distance de recouvrement D2 en Z avec la traverse avant 22 (fig. 8). Cet agencement particulier permet d'éviter une rotation des butées par rapport à la traverse avant 22 en cas de choc, notamment lorsque la face inférieure 143 de l'élément absorbeur de choc 14 (depuis laquelle font saillie les butées) est située en regard de la traverse 22 suivant la direction longitudinale X, tel que représenté figure 8. L'absence de pivotement des butées va améliorer l'absorption du choc par les butées suivant la direction X, pour une meilleure protection du support de radar. Des recouvrements D1 et D2 de 10 mm ou plus sont suffisants pour éviter un pivotement des butées en cas de faible choc.

On notera que si cette face inférieure 143 de l'élément absorbeur de choc 14 s'étendait dans un même plan horizontal que la face inférieure 23 de la traverse avant 22, il suffirait alors que chaque butée 141, 142 soit située en regard de la traverse avant 22 sur au moins une partie de sa longueur mesurée suivant la direction longitudinale X pour éviter un pivotement des butées en cas de choc. L'important pour éviter le pivotement des butées est en effet qu'en coupe transversale, les butées 141, 142 et l'élément absorbeur de choc définissent une forme en L telle que celle de la figure 8, cette forme en L étant en regard d'un coin de la traverse avant 22.

Un recouvrement D1 en X de 10 mm ou plus suffit pour éviter une rotation des butées et améliorer le comportement en absorption de choc des butées en X.

Les figures 6 et 7 montrent la déformation du bouclier résultant de l'intrusion maximale d'un impacteur 30 conforme à la règlementation ECE42. Les butées 141, 142 sont écrasées en partie contre la traverse avant 22 sans avoir pivoté. Le support de radar 16 est incliné mais intact malgré la déformation de la partie inférieure du bouclier grâce à l'amortissement réalisé par les butées.

L'invention permet ainsi d'obtenir de manière simple une protection efficace d'un support de radar lors d'un faible choc en X.

## Revendications

1. Bouclier avant (10) de véhicule automobile présentant une face interne (10a) et une face externe (10b) et des directions transversale, longitudinale et verticale correspondant aux directions transversale, longitudinale et verticale respectivement d'un véhicule lorsque le bouclier est monté sur celui-ci, le bouclier comprenant :
- une peau de bouclier (12),
- un élément absorbeur choc (14) s'étendant suivant la direction transversale et fixé à la peau de bouclier (12) du côté de la face interne (10a) du bouclier,
- un support de radar (16) situé à l'avant et s'étendant en dessous de l'élément absorbeur de choc (14) lorsque le bouclier est monté sur le véhicule et fixé à la face interne du bouclier, le support de radar étant notamment situé au centre ou à proximité du centre du bouclier suivant la direction transversale,
l'élément absorbeur de choc (14) présentant deux butées (141, 142) d'absorption de choc situées de part et d'autre du support de radar (16) suivant la direction transversale, ces butées étant solidaires d'une face inférieure (143) de l'élément absorbeur de choc, **caractérisé en ce que** le bouclier présente une partie inférieure (12) formée par la peau de bouclier et une partie supérieure (13) formant un renfort, l'élément absorbeur de choc (14) étant fixé à la peau de bouclier, à proximité de la partie supérieure (13), et le support de radar (14) étant fixé à la partie inférieure et optionnellement à la partie supérieure du bouclier.

2. Bouclier avant (10) selon la revendication 1, **caractérisé en ce que** les butées (141, 142) font saillie d'une face verticale (144) de l'élément absorbeur de choc située d'un côté opposé à la peau de bouclier.

3. Bouclier avant (10) selon la revendication 1 ou 2, **caractérisé en ce que** les butées (141, 142) sont réalisées d'une pièce avec l'élément absorbeur de choc (14).

4. Bouclier avant (10) selon l'une quelconque des revendications 1 à 3, **caractérisé en ce que** chaque butée (141, 142) comprend des parois (145) définissant des nervures s'étendant verticalement et perpendiculairement à la direction transversale et des parois (146, 147) définissant un boîtier recevant les nervures et solidaires de bords verticaux ou sensiblement verticaux des nervures, le boîtier étant optionnellement ouvert sur une face inférieure opposée à l'élément absorbeur de choc.

5. Bouclier avant (10) selon l'une quelconque des revendications 1 à 4, **caractérisé en ce que** le support de radar comprend au moins un élément de fixation supérieur (162) et au moins un élément de fixation inférieur (163, 164) fixés chacun à la peau de bouclier (12), l'au moins un élément de fixation supérieur (162) étant optionnellement fixé aussi à une partie supérieure du bouclier, le support de radar comprenant optionnellement un cadre (161) de réception et de fixation du radar situé entre les éléments de fixation supérieur et inférieur.

6. Bouclier avant (10) selon l'une quelconque des revendications 1 à 5, **caractérisé en ce que** l'élément absorbeur de choc (14), le support de radar (16), et optionnellement la partie supérieure du bouclier, sont en matériau polymère.

7. Structure avant (20) de véhicule automobile **caractérisée en ce qu'**elle comprend un bouclier avant (10) selon l'une quelconque des revendications 1 à 6 et une traverse avant (22) de support du bouclier, l'élément absorbeur de choc s'étendant le long de la traverse avant, en regard de celle-ci suivant une direction longitudinale du véhicule lorsque la structure avant est montée sur le véhicule.

8. Structure avant (20) de véhicule automobile selon la revendication 7, **caractérisé en ce que** chaque butée (141, 142) est située :
- en regard de la traverse avant (22) sur au moins une partie de sa longueur mesurée suivant la direction longitudinale,
- optionnellement en regard de la traverse avant sur au moins une partie de sa hauteur mesurée verticalement lorsque la structure avant est montée sur le véhicule.

9. Véhicule automobile comprenant un bouclier selon l'une quelconque de revendications 1 à 6 ou une structure avant selon la revendication 7 ou 8.

## Patentansprüche

1. Frontstoßfänger (10) für ein Kraftfahrzeug, aufweisend eine Innenseite (10a) und eine Außenseite (10b) und Quer-, Längs- und vertikale Richtungen, die den jeweiligen Quer-, Längs- und vertikalen Richtungen eines Fahrzeugs entsprechen, wenn der Stoßfänger an diesem montiert ist, wobei der Stoßfänger umfasst:
- eine Stoßfängerhaut (12),
- ein Stoßabsorberelement (14), das sich entlang der Querrichtung erstreckt und an der Stoßfängerhaut (12) auf der Seite der Innenseite (10a) des Stoßfängers befestigt ist,
- eine Radarhalterung (16), die an der Front gelegen ist und sich unter dem Stoßabsorberelement (14) erstreckt, wenn der Stoßfänger an dem Fahrzeug montiert ist, und an der Innenseite des Stoßfängers befestigt ist, wobei die Radarhalterung insbesondere in der Mitte oder in der Nähe der Mitte des Stoßfängers entlang der Querrichtung gelegen ist,
wobei das Stoßabsorberelement (14) zwei Anschläge (141, 142) zur Stoßabsorption aufweist, die beidseits der Radarhalterung (16) entlang der Querrichtung gelegen sind, wobei diese Anschläge mit einer Unterseite (143) des Stoßabsorberelements fest verbunden sind, **dadurch gekennzeichnet, dass** der Stoßfänger einen unteren Teil (12), der durch die Stoßfängerhaut gebildet wird, und einen oberen Teil (13), der eine Aussteifung bildet, aufweist, wobei das Stoßabsorberelement (14) an der Stoßfängerhaut in der Nähe des oberen Teils (13) befestigt ist und wobei die Radarhalterung (14) an dem unteren Teil und optional an dem oberen Teil des Stoßfängers befestigt ist.

2. Frontstoßfänger (10) nach Anspruch 1, **dadurch gekennzeichnet, dass** die Anschläge (141, 142) von einer vertikalen Seite (144) des Stoßabsorberelements vorspringen, die auf einer zur Stoßfängerhaut entgegengesetzten Seite gelegen ist.

3. Frontstoßfänger (10) nach Anspruch 1 oder 2, **dadurch gekennzeichnet, dass** die Anschläge (141, 142) einstückig mit dem Stoßabsorberelement (14) ausgeführt sind.

4. Frontstoßfänger (10) nach einem der Ansprüche 1 bis 3, **dadurch gekennzeichnet, dass** jeder Anschlag (141, 142) Wände (145) umfasst, die Rippen definieren, die sich vertikal und senkrecht zu der Querrichtung erstrecken, und Wände (146, 147), die ein Gehäuse definieren, das die Rippen aufnimmt und mit vertikalen oder im Wesentlichen vertikalen Rändern der Rippen fest verbunden sind, wobei das Gehäuse optional an einer unteren Seite, die zu dem Stoßabsorberelement entgegengesetzt ist, offen ist.

5. Frontstoßfänger (10) nach einem der Ansprüche 1 bis 4, **dadurch gekennzeichnet, dass** die Radarhalterung mindestens ein oberes Befestigungselement (162) und mindestens ein unteres Befestigungselement (163, 164) umfasst, die jeweils an der Stoßfängerhaut (12) befestigt sind, wobei das mindestens eine obere Befestigungselement (162) optional auch an einem oberen Teil des Stoßfängers befestigt ist, wobei die Radarhalterung optional einen Rahmen (161) zur Aufnahme und Befestigung des Radars umfasst, der zwischen den oberen und unteren Befestigungselementen gelegen ist.

6. Frontstoßfänger (10) nach einem der Ansprüche 1 bis 5, **dadurch gekennzeichnet, dass** das Stoßabsorberelement (14), die Radarhalterung (16) und optional der obere Teil des Stoßfängers aus Polymermaterial sind.

7. Frontstruktur (20) für ein Kraftfahrzeug, **dadurch gekennzeichnet, dass** sie einen Frontstoßfänger (10) nach einem der Ansprüche 1 bis 6 und einen Frontquerträger (22) zur Halterung des Stoßfängers umfasst, wobei sich das Stoßabsorberelement entlang des Frontquerträgers erstreckt, gegenüber von diesem entlang einer Längsrichtung des Fahrzeugs, wenn die Frontstruktur an dem Fahrzeug montiert ist.

8. Frontstruktur (20) für ein Kraftfahrzeug nach Anspruch 7, **dadurch gekennzeichnet, dass** jeder Anschlag (141, 142) gelegen ist:
- gegenüber dem Frontquerträger (22) über mindestens einen Teil seiner entlang der Längsrichtung gemessenen Länge,
- optional gegenüber dem Frontquerträger über mindestens einen Teil seiner vertikal gemessenen Höhe, wenn die Frontstruktur an dem Fahrzeug montiert ist.

9. Kraftfahrzeug mit einem Stoßfänger nach einem der Ansprüche 1 bis 6 oder einer Frontstruktur nach Anspruch 7 oder 8.

## Claims

1. Front protective moulding (10) for a motor vehicle having an internal face (10a) and an external face (10b) and transverse, longitudinal and vertical directions corresponding respectively to the transverse, longitudinal and vertical directions of a vehicle when the protective moulding is mounted thereon, the protective moulding comprising:
- a protective moulding skin (12),
- an impact absorbing element (14) extending in the transverse direction and fixed to the protective moulding skin (12) on the side of the internal face (10a) of the protective moulding,
- a radar support (16) situated at the front and extending beneath the impact absorbing element (14) when the protective moulding is mounted on the vehicle and fixed to the internal face of the protective moulding, the radar support being notably situated at the centre or near the centre of the protective moulding in the transverse direction,
the impact absorbing element (14) having two impact absorbing buffers (141, 142) situated one on each side of the radar support (16) in the transverse direction, these buffers being secured to a lower face (143) of the impact absorbing element, **characterized in that** the protective moulding has a lower part (12) formed by the protective moulding skin and an upper part (13) forming a reinforcement, the impact absorbing element (14) being fixed to the protective moulding skin, near the upper part (13), and the radar support (14) being fixed to the lower part and optionally to the upper part of the protective moulding.

2. Front protective moulding (10) according to Claim 1, **characterized in that** the buffers (141, 142) project from a vertical face (144) of the impact absorbing element, which face is situated on an opposite side to the protective moulding skin.

3. Front protective moulding (10) according to Claim 1 or 2, **characterized in that** the buffers (141, 142) are produced as one piece with the impact absorbing element (14) .

4. Front protective moulding (10) according to any one of Claims 1 to 3, **characterized in that** each buffer (141, 142) has walls (145) defining ribs extending vertically and perpendicularly with respect to the transverse direction and walls (146, 147) defining a housing accepting the ribs and secured to vertical or substantially vertical edges of the ribs, the housing being optionally open on a lower face opposite to the impact absorbing element.

5. Front protective moulding (10) according to any one of Claims 1 to 4, **characterized in that** the radar support comprises at least one upper fixing element (162) and at least one lower fixing element (163, 164) each fixed to the protective moulding skin (12), the at least one upper fixing element (162) being optionally also fixed to an upper part of the protective moulding, the radar support optionally comprising a surround (161) for receiving and fixing the radar situated between the upper and lower fixing elements.

6. Front protective moulding (10) according to any one of Claims 1 to 5, **characterized in that** the impact absorbing element (14), the radar support (16) and optionally the upper part of the protective moulding are made of a polymer material.

7. Motor vehicle front structure (20), **characterized in that** it comprises a front protective moulding (10) according to any one of Claims 1 to 6 and a protective moulding supporting front crossmember (22), the impact absorbing element extending along the front crossmember, facing same in a longitudinal direction of the vehicle when the front structure is mounted on the vehicle.

8. Motor vehicle front structure (20) according to Claim 7, **characterized in that** each buffer (141, 142) is situated:
- facing the front crossmember (22) over at least part of the length thereof measured in the longitudinal direction,
- optionally facing the front crossmember over at least part of the height thereof measured vertically when the front structure is mounted on the vehicle.

9. Motor vehicle comprising a protective moulding according to any one of Claims 1 to 6 or a front structure according to Claim 7 or 8.
